**Europäisches Patentamt**

**European Patent Office**

**Office européen des brevets**

(19)

(11) Numéro de publication: **0 187 606**
**B1**

(12)

# FASCICULE DE BREVET EUROPEEN

(45) Date de publication du fascicule du brevet:
**01.06.88**

(51) Int. Cl.⁴: **F 16 L 23/02,** F 16 J 15/12

(21) Numéro de dépôt: **85420212.4**

(22) Date de dépôt: **26.11.85**

(54) Joint d'étanchéité pour assemblage à faces planes et son procédé de fabrication.

(30) Priorité: **28.11.84 FR 8418566**

(43) Date de publication de la demande:
**16.07.86 Bulletin 86/29**

(45) Mention de la délivrance du brevet:
**01.06.88 Bulletin 88/22**

(84) Etats contractants désignés:
**AT BE CH DE FR GB IT LI LU NL SE**

(56) Documents cités:
**EP - A - 0 052 484**
**DE - A - 2 928 954**
**DE - B - 1 775 417**
**FR - A - 2 517 789**

**LE VIDE - LES COUCHES MINCES, no. 197, juin, juillet,**
**août 1979, pages 217-244, Paris, FR; B.L. BLANC:**
**"Technologie de l'étanchéité"**

(73) Titulaire: **CEFILAC, 23, rue Balzac, F-75008 Paris (FR)**

(72) Inventeur: **Chabance, Joel, Montoisel Pralong,**
**F-42600 Montbrison (FR)**
Inventeur: **Combe, Gérard, Allée de la Colline,**
**F-42530 Saint Genest Lerpt (FR)**

(74) Mandataire: **Séraphin, Léon et al, PECHINEY 28, rue de**
**Bonnel, F-69433 Lyon Cedex 3 (FR)**

ACTORUM AG

## Description

La présente invention concerne le domaine des garnitures ou joints d'étanchéité pour brides et assemblages à faces planes.

### Exposé du problème

Pour l'étanchéité des raccords de tuyauteries utilisés à basse ou haute température (de −245°C à +1000°C) et/ou subissant des chocs thermiques, les joints existants en graphite expansé moulé fluent sous l'effet des contraintes de serrage ou de dilatation et leur serrage doit fréquemment être revu, ce qui est gênant et parfois inacceptable. Les joints réalisés avec des matériaux à base d'amiante ont une mauvaise reprise élastique due à la relaxation sous charge de l'amiante et ne donnent pas non plus de résultats satisfaisants.

On a donc cherché à mettre au point un joint d'étanchéité pour raccords de tuyauteries, et plus généralement pour assemblages à faces planes, qui, pour les conditions d'utilisation indiquées plus haut, permette d'obtenir une étanchéité plus fiable et plus durable.

### Art antérieur connu

Dans le document «Le vide — Les couches minces» No. 197, 1979, 6/7/8 B.L. Blanc et al. p. 240, on décrit un joint d'étanchéité pour assemblage à faces planes, composé de spires concentriques en acier inoxydable et d'un matériau intercalaire en amiante, remplacé au milieu du joint par un matériau intercalaire tendre tel que le PTFE non fritté, le graphite expansé ou le plomb. Il est indiqué que l'utilisation de tels joints en vide poussé est à éviter.

Par ailleurs, la demande de brevet FR-A-2 517 789 décrit un joint d'étanchéité comportant deux éléments métalliques annulaires concentriques, dont les faces latérales en regard, comportant des gorges en V ouvertes en direction l'une de l'autre, définissent un évidement dans le quel est moulé un enroulement de graphite expansé. Le graphite prend une forme ovoïde qui remplit l'espace entre les deux anneaux métalliques mais fait saillie en un bourrelet annulaire sur chacune des faces opposées à ces anneaux. Au serrage, l'étanchéité est assurée par la seule reprise élastique du graphite expansé ainsi moulé.

### Exposé de l'invention

Le joint d'étanchéité de l'invention, destiné à des assemblages à faces planes et en particulier à des raccords à brides, a, comme cela est connu par le document FR-A-2 517 789, la forme d'un anneau et comporte une âme annulaire en graphite expansé moulé comprise entre deux anneaux métalliques intérieur ex extérieur. De façon différente:

a) l'anneau formé par le joint comprend deux faces parallèles planes qui sont essentiellement celles de l'âme en graphite qui a été moulé entre les anneaux métalliques intérieur et extérieur, les extrémités ou bords de ces anneaux affleurant ou avoisinant, typiquement à moins de 0,3 mm, ces faces planes;

b) ces deux anneaux métalliques intérieur et extérieur ont l'un et l'autre un effet ressort transversalement, c'est-à-dire selon la direction (X) perpendiculaire aux faces parallèles planes, et ils présentent en section droite perpendiculaire aux faces planes du joint une paroi ondulée ayant pour direction principale, la direction (X) sensiblement axiale dans le cas d'un joint en forme d'anneau plat circulaire;

c) l'âme annulaire en graphite expansé moulé a, avant utilisation du joint, c'est-à-dire avant le premier serrage effectué pour réaliser une étanchéité, une masse spécifique comprise entre 1,4 et 1,9 g/cm³.

Le comportement élastique du joint de l'invention lors de son serrage résulte de la combinaison des comportements élastiques de son âme en graphite comprimé et de chacun de ses anneaux métalliques intérieur et extérieur.

Ce comportement se distingue de celui du joint de FR-A-2 517 789 précédemment étudié, dans lequel la fonction élastique est exercée par l'âme en graphite expansé moulé seule, tandis que les anneaux intérieur et extérieur sont rigides et jouent au serrage le rôle de butées. Il se distingue aussi du comportement du joint spiralé du document «Le vide — Les couches minces» p. 240, joint dans lequel le comportement élastique est uniquement dû aux spires métalliques concentriques à paroi ondulée, le matériau intercalaire mou venant seulement s'étaler dans les interstices.

Dans le joint d'étanchéité de l'invention, les anneaux sont sur chant et leurs ondulations permettent par effet d'amorce, des déformations, et/ou par leur resserrage une diminution élastique de hauteur ou de largeur hors-tout lors du serrage produisant une diminution d'épaisseur du joint.

De façon globale, lors du serrage et du desserrage du joint de l'invention, son âme annulaire en graphite et ses anneaux métalliques élastiques intérieur et extérieur agissent élastiquement de façon combinée et harmonisée, cette combinaison étant liée au contact intime entre le graphite et les anneaux, particulièrement à l'endroit des ondulations de ces anneaux. Les anneaux métalliques élastiques du joint de l'invention ont ainsi un double rôle: celui d'anneaux anti-extrusion empêchant le fluage du graphite, et celui de moyens renforçant l'élasticité de l'âme en graphite expansé comprimé.

L'anneau intérieur et l'anneau extérieur à effet ressort, peuvent être fabriqués soit à partir d'un même profil de bande métallique, soit à partir de deux profils différents. Cela peut dépendre en particulier de leur association éventuelle avec un anneau de renfort intérieur pour une utilisation avec des fluides agressifs et/ou des pressions élevées, et/ou avec un anneau de centrage extérieur permettant la mise en place du joint en un emplacement non accessible, par exemple à cause de la distance ou d'une température trop élevée. Une ondulation du bord extérieur de l'anneau de renfort intérieur, ou une ondulation du bord intérieur de l'anneaux de centrage extérieur, peut alors permettre leur encliquetage sur le joint d'étanchéité permettant la mise en place et le positionnement du joint muni de son anneau de renfort et/ou de son anneau de centrage.

L'épaisseur de tels anneaux doit être inférieure ou égale à l'épaisseur de serrage maximal du joint.

Les anneaux métalliques de l'invention sont composés d'une spire de bande profilée fermée par soudage, ou de plusieurs spires successives serrées les unes contre les autres.

L'un des anneaux métalliques au moins est avantageusement composé d'une bande profilée sur elle-même et d'extrémité soudée sur la spire qu'elle recouvre, par exemple par points. L'anneau comprend alors soit une spire et une extrémité recouvrant cette spire unique, soit plusieurs spires d'extrémités soudées de la même façon. Ce soudage de l'extrémité en recouvrement typiquement par points par résistance, permet de retenir les spires successives de l'anneau, dont les ondulations s'emboîtent les unes dans les autres du fait de l'enroulement en spirale, en position serrée lors de l'utilisation du joint.

Le nombre de spires est habituellement compris entre 1 et 5. Le nombre des spires des anneaux extérieur et intérieur est choisi de façon que, lors du serrage, le graphite soit convenablement comprimé: on recherche habituellement un serrage de 10 à 35% sur l'épaisseur, et de façon typique de 15 à 30% sur l'épaisseur. Le choix du nombre de spires des anneaux bordant le joint d'étanchéité de l'invention permet alors d'adapter la résistance à la compression du joint à l'effort de serrage à supporter dans ses conditions d'utilisation (température, pression à étancher). De façon typique, chacun des deux anneaux métalliques intérieur et extérieur comporte deux à quatre spires de bande profilée à trois ondulations d'épaisseur comprise entre 0,15 et 0,25 mm ce qui donne un meilleur comportement élastique qu'une seule spire de bande profilée de même épaisseur totale.

Ce sont les faces planes du graphite, limitées par l'extrémité des anneaux métalliques intérieur et extérieur, qui assurent l'étanchéité des faces planes de l'assemblage. Lors du serrage du joint d'étanchéité, le graphite se moule sous l'effet de la compression exercée par ce serrage dans les anfractuosités des faces planes de l'assemblage, par exemple dans les rayures ou piqûres éventuelles, ce qui assure une étanchéité particulièrement fiable. Il a été trouvé avantageux d'utiliser un joint ayant une âme en graphite moulée avec un niveau de compression moyen, de façon à avoir une meilleure faculté de moulage de ce graphite dans les petits défauts des surfaces planes à étancher.

La masse spécifique apparente de l'âme en graphite du joint est alors comprise dans l'état initial entre 1,3 et 1,9 g/cm$^3$, et de préférence entre 1,4 et 1,8 g/cm$^3$. Lors des compressions ultérieures dues aux serrages du joint d'étanchéité, la masse spécifique augmentera, par exemple jusqu'à 2,2 g/cm$^3$, au plus, le joint conservera alors une bonne élasticité au serrage-desserrage tant qu'on n'aura pas dépassé son serrage maximal qui est inférieur ou égal à 35% de diminution d'épaisseur.

Les anneaux métalliques bordant le graphite permettent d'éviter le fluage du graphite, et ils permettent, en même temps, en combinaison avec le graphite, de régler l'aptitude à l'écrasement du joint et son élasticité. Le joint d'étanchéité de l'invention donne peu d'effet de relaxation. Il a une bonne inertie chimique liée au graphite et au choix du métal ou alliage constitutif de ses anneaux métalliques, et une bonne tenue en température depuis les températures cryogéniques (jusqu'à −245°C) jusqu'à environ +1000°C avec ou sans rayonnements radioactifs.

Les métaux ou alliages utilisés pour les anneaux extérieur et intérieur sont notamment: les aciers inoxydables AISI 304, 304L, 316, 316L, jusque vers 800°C, et les alliages de nickel tels les INCONEL.

Le joint d'étanchéité de l'invention permet, grâce à son bon comportement élastique et au moulage des surfaces à étancher par son âme en graphite, un bon maintien de l'étanchéité avec des températures variables et particulièrement en présence de chocs thermiques.

L'invention a aussi pour objet le procédé de fabrication du joint d'étanchéité selon l'invention qui comprend schématiquement les étapes suivantes:

a) on prépare un anneau métallique intérieur en conformant une spire de bande profilée ou plusieurs spires concentriques serrées les unes contre les autres provenant d'une même bande profilée, la paroi de ladite bande profilée ayant dans l'anneau une direction principale sensiblement axiale, et l'anneau étant fermé par soudage;

b) on réalise un anneau métalliques extérieur de façon semblable, sout à partir de la même bande profilée, soit à partir d'une bande profilée différente;

c) on approvisionne des bandes de graphite expansé et on en prépare une quantité donnant, après compression sous forme du joint à réaliser, une âme en graphite de masse spécifique comprise entre 1,3 et 1,9 g/cm$^3$, et de préférence entre 1,4 et 1,8 g/cm$^3$. On utilise typiquement du graphite expansé de masse spécifique nominale «0,7 g/cm$^3$» pour obtenir une âme comprimée de 1,3 à 1,5 g/cm$^3$, et de masse spécifique nominale «1,1 g/cm$^3$» pour obtenir une âme comprimée de 1,6 = 1,9 g/cm$^3$ de façon à obtenir une bonne élasticité pour l'âme du joint;

d) on effectue une ou plusieurs précompressions du graphite expansé à une masse spécifique intermédiaire, de façon à augmenter le taux de compression global du graphite et à faciliter sa mise en place entre les anneaux (étape f);

e) on dispose les anneaux extérieur et intérieur dans l'outillage selon leur disposition finale dans le joint à réaliser, les anneaux extérieur et intérieur reposant sur chant sur une même face plane de l'outillage et étant en butée respectivement vers l'extérieur et vers l'intérieur;

f) on dispose le graphite expansé précomprimé dans l'espace compris entre les anneaux extérieur et intérieur et immédiatement au-dessus et on effectue la compression de ce graphite dans le moule annulaire constitué par ces deux anneaux et par la face plane de l'outillage supportant ces anneaux ainsi que par la face parallèle constituant la face active du mandrin de compression;

g) on démoule le joint d'étanchéité ainsi obtenu.

De façon préférentielle, l'un au moins des anneaux métalliques extérieur ou intérieur est réalisé en enroulant une portion de bande métallique profilée sur un cylindre selon une spire avec recouvrement ou selon plusieurs spires enroulées en spirale serrée, et en soudant par points d'extrémité de la bande profilée sur la spire qu'elle recouvre. Pour avoir une bonne élasticité de ces anneaux en direction transversale, on a trouvé avantageux d'utiliser un profil en W, c'est-à-dire à trois ondulations, d'épaisseur typique 0,15 à 0,25 mm enroulé sur lui-même selon 2 à 4 spires avec recouvrement.

Lors du moulage du graphite, entre les anneaux métalliques extérieur et intérieur réalisant le joint de l'invention, les ondulations des anneaux métalliques jouent un rôle important non seulement pour régler le comportement élastique du joint, mais encore pour l'accrochage de l'âme en graphite moulée et de ces anneaux.

Le joint d'étanchéité de l'invention a typiquement: un diamètre intérieur pouvant varier de 10 mm à plus d'un mètre, une épaisseur comprise entre 2 et 10 mm et une largeur d'anneau comprise entre 5 et 50 mm. L'épaisseur des bandes métalliques profilées dont sont faits les anneaux extérieur et intérieur est typiquement comprise entre 0,5 et 1,2 mm.

Le joint de l'invention est utilisé, par example, pour des brides ou assemblages à faces planes sans emboîtement, ou à faces planes avec emboîtement simple ou double, ou encore pour des brides ou assemblages à gorge périphérique à fond plat. Dans le cas de tests d'étanchéité à l'hélium, on a comparé un joint selon l'invention avec un joint spiralé métal/graphite, et on a observé que pour le même taux de fuite le joint selon l'invention demande un effort de serrage moitié et donne une reprise élastique double de celle du joint spiralé.

*Exemples*

Les exemples qui suivent permettront d'illustrer et de décrire plus en détail l'invention.

La figure 1 représente un exemple de joint selon l'invention, en demi-coupe axiale.

Les figures 2a et 2b représentent schématiquement deux profils de bagues, en coupe axiale.

La figure 3 représente schématiquement un joint avec anneau de renfort intérieur et anneau de centrage extérieur, en demi-coupe axiale.

Les figures 4a et 4b représentent schématiquement un joint dans le cas d'une bride à gorge périphérique, en position non serrée et après serrage, en demi-coupes axiales.

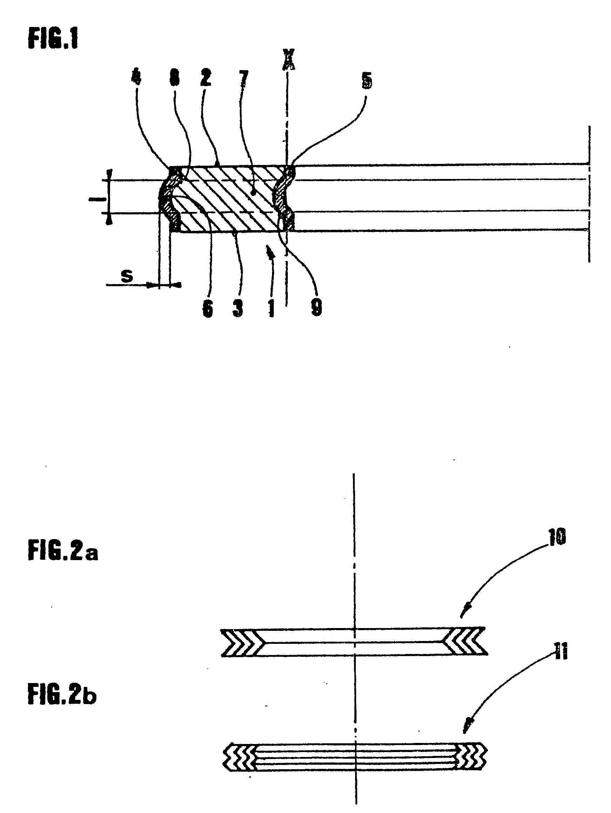

Le joint (1) présenté en exemple sur la figure 1, est un anneau circulaire de dimensions principales: diamètre hors-tout 86 mm, diamètre intérieur 73 mm, épaisseur ou distance entre les deux faces planes (2) et (3): 3 mm. Ses anneaux extérieur (4) et intérieur (5) ont été réalisés à partir d'une bande profilée élastique transversalement d'épaisseur 0,2 mm et de largeur 3 mm en acier inoxydable AISI 316L, bande ayant en son centre une ondulation (6) le largeur (1) égale à 1,2 mm et de surépaisseur (s) ou profondeur de creux égale à 0,4 mm qui apparaît en section droite sur la figure 1. Chaque anneau (4) ou (5) est constitué par une portion de bande enroulée sans fin selon trois spires avec extrémités soudées par points sur la bande sous-jacente, l'enroulement obtenu ayant une épaisseur hors-tout de 0,8 mm.

Dans ces anneaux (4) et (5), la direction principale (X) de la paroi de la bande profilée est en tous points axiale, et le faible jeu qui existe entre les spires, facilite les déformations des anneaux au serrage et au desserrage du joint.

Le graphite expansé moulé constituant l'âme (7) du joint adhère parfaitement aux surfaces en regard (8) et (9) appartenant respectivement à l'anneau extérieur (4) et à l'anneau intérieur (5). L'épaisseur de cette âme (7) est égale à la largeur des anneaux (4) et (5) de sorte que la compressibilité et les réactions élastiques du joint (1) en serrage/desserrrage dépendent à la fois de trois composants (4, 5, 7). Le serrage du joint (1) en service entraînera une adhérence intime du graphite des faces planes (2) et (3) ou voisin de ces faces planes aux surfaces à étancher, avec pénétration des petits défauts en creux éventuels, et en même temps un léger respoussage transversal correspondant au pliage sur l'ondulation (6) et à partir de cette ondulation, ainsi qu'une variation en grande partie réversible de la compacité.

La masse spécifique du graphite ainsi moulé par compression dans le joint (1) est d'environ 1,6. Le joint (1) est destiné typiquement à la réalisation d'étanchéité entre les surfaces parallèles de raccords à brides jusqu'à 800°C environ, dans des conditions corrosives et à des pressions allant jusqu'à 250 bars, avec ou sans irradiation. Pour assurer alors l'étanchéité, la position de serrage minimal correspond à une épaisseur de 2,65 mm tandis que la position de serrage maximal est de 2,2 mm. Dans cet intervalle, les possibilités de reprise élastique du joint restent de l'ordre de 10% en volume ou en épaisseur.

Les figures 2a et 2b représentent schématiquement en coupe axiale des variantes de profil d'anneaux métalliques extérieurs ou intérieurs, ici à 4 spires enroulées sur elles-mêmes.

L'anneau (10) de la figure 2a est constitué par une bande enroulée sur elle-même ayant en section axiale une seule ondulation de concavité tournée vers l'extérieur. Dans le cas de l'anneau (11) de la figure 2b, les spires de la bande enroulée sur elle-même présentent en section axiale deux ondulations de concavité tournée vers l'extérieur de l'anneau.

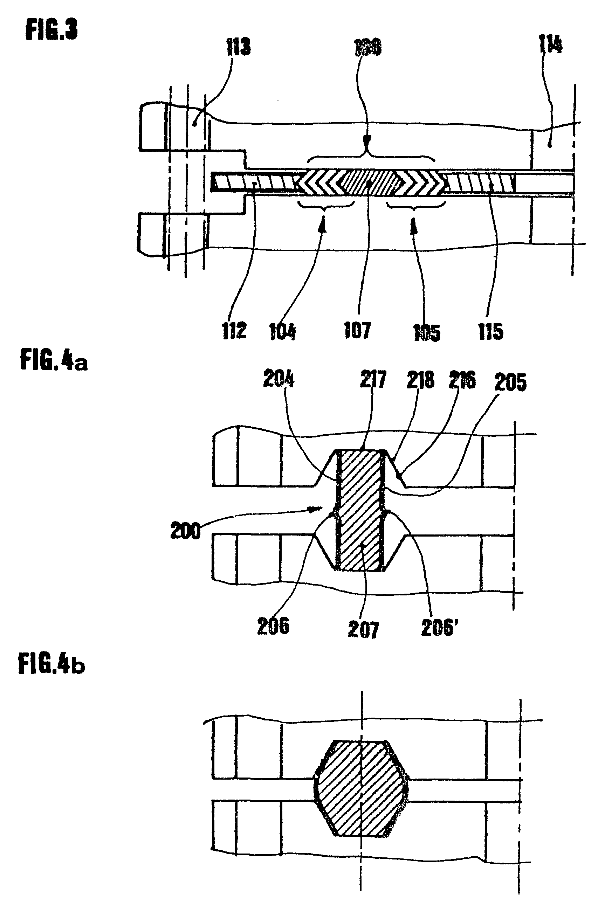

Des ondulations multiples sont souvent préférées dans le cas de joints relativement épais, à moins qu'il n'y ait lors de l'écrasement un guidage extérieur de la déformation des anneaux extérieur et intérieur: c'est le cas d'une bride à gorge périphérique à fond plat de profil adapté (figures 4a et 4b).

La figure 3 représente un joint d'étanchéité (100) selon l'invention comprenant une âme (107) en graphite expansé moulé entre un anneau intérieur spiralé (105) à 5 spires et un anneau extérieur spiralé (104) également à 5 spires placé entre des brides à faces parallèles plates. Le joint (100) est muni par encliquetage d'un anneau de centrage extérieur (112) ayant une double fonction: il permet le centrage à distance par la boulonnerie (113) représentée en trait interrompu, et son épaisseur fixe le serrage maximal du joint (100). Cet anneau de centrage extérieur (112) soumis à une température modérée, habituellement moins de 150°C, est typiquement en acier ordinaire revêtu. Le joint (100) est également muni par encliquetage, du côté du milieu corrosif et chaud circulant dans la tuyauterie (114), d'un anneau de renfort intérieur (115), par exemple en acier inoxydable 316L, anneau qui limite la température ainsi que les problèmes de corrosion et les problèmes de contraintes dues à la pression au niveau du joint (100).

La figure 4a représente un autre joint d'étanchéité selon l'invention (200) comportant une âme en graphite (207) moulée entre des anneaux extérieur (204) et intérieur (205) à une spire circulaire avec recouvrement soudé. Ces anneaux (204) et (205) présentent chacun à mi-hauteur une ondulation de hauteur limitée (206) et (206') apparaissant en relief sur les surfaces latérales du joint. Le joint (200) est disposé entre les gorges périphériques circulaires (216) des brides du raccord. Les gorges (216) ont chacune un fond annulaire circulaire, plat (217) de même largeur que les faces planes (202) d'extrémités du joint (200), et des flancs (218) tronconiques permettant une déformation avec gonflement du joint (200).

La figure 4b représente l'assemblage en position serrée. Les ondulations (206, 206') ont servi d'amorce pour la déformation du joint (200) écrasé, et la poursuite de cette déformation a été guidée et contrôlée par les flancs (218) des gorges (216). La position représentée correspond au serrage maximal du joint (200), elle présente une solution d'étanchéité particulièrement fiable.

## Revendications

1. Joint d'étanchéité (1) pour assemblage à faces planes et en particulier pour raccord à brides, ledit joint ayant la forme d'un anneau et comportant une âme annulaire (7) en graphite expansé moulé comprise entre deux anneaux métalliques intérieur (5) et extérieur (4), caractérisé en ce que:

— l'anneau formé par le joint (1) comprend deux faces parallèles planes (2) qui sont essentiellement celles de l'âme en graphite (7) moulée entre les anneaux métalliques intérieur (5) et extérieur (4), les bords de ces deux anneaux affleurant lesdites faces planes;

— les deux anneaux métalliques intérieur (5) et extérieur (4) ont l'un et l'autre un effet ressort selon la direction (X) perpendiculaire aux faces parallèles planes (2) et présentent, en section droite perpendiculaire aux faces planes du joint (1), une paroi ondulée ayant pour direction principale ladite direction (X);

— l'âme annulaire (7) en graphite expansé moulé a, avant utilisation du joint (1), une masse spécifique comprise entre 1,4 et 1,9 g/cm$^3$.

2. Joint selon la revendication 1, caractérisé en ce que l'un au moins de ses deux anneaux métalliques (4, 5) est spiralé sur lui-même et soudé.

3. Joint selon la revendication 2, caractérisé en ce que ses deux anneaux métalliques (4 et 5) sont spiralés sur eux-mêmes et soudés et comportent un nombre de spires choisi de façon que, lors du serrage dudit joint (1) dans ses conditions d'utilisation, celui-ci s'écrase de 10 à 35%.

4. Joint selon la revendication 3, caractérisé en ce que chacun des deux anneaux métalliques intérieur (5) et extérieur (4) comporte 2 à 4 spires de bande profilée à trois ondulations d'épaisseur comprise entre 0,15 et 0,25 mm.

5. Procédé de fabrication d'un joint d'étanchéité (1) pour assemblage à faces planes et en particulier pour raccord à brides, ledit joint (1) ayant la forme d'un anneau plat limité par deux faces parallèles planes (2) et étant composé de graphite et de métal, caractérisé en ce qu'il comprend les étapes suivantes:

a) on prépare un anneau métallique intérieur (5) et conformant une spire de bande profilée ou plusieurs spires concentriques serrées les unes contre les autres provenant d'une même bande profilée, la paroi de ladite bande profilée ayant dans l'anneau (5) une direction principale (X) sensiblement axiale, et l'anneau (5) étant fermé par soudage;

b) on réalise un anneau métallique extérieur (4) de façon semblable, soit à partir de la même profilée, soit à partir d'une bande profilée différente;

c) on approvisionne des bandes de graphite expansé et on en prépare une quantité donnant, après compressiosn sous forme du joint à réaliser, une masse spécifique comprise entre 1,3 et 1,9 g/cm$^3$;

d) on effectue une ou plusieurs précompressions du graphite expansé à une masse spécifique intermédiaire;

e) on dispose les anneaux extérieur (4) et intérieur (5) dans l'outillage, selon leur disposition finale dans le joint (1) à réaliser, les anneaux extérieur (4) et intérieur (5) reposant sur chant sur une même face plane de l'outillage et étant en butée respectivement vers l'extérieur et vers l'intérieur;

f) on dispose le graphite expansé précomprimé dans l'espace compris entre les anneaux extérieur (4) et intérieur (5) et immédiatement au-dessus, et on effectue la compression de ce graphite dans le moule annulaire constitué par ces deux anneaux (4, 5) et par la face plane de l'outillage supportant lesdits anneaux ainsi que par la face parallèle constituant la face active du mandrin de compression;

g) on démoule le joint d'étanchéité ainsi obtenu.

6. Procédé selon la revendication 5, caractérisé en ce que on réalise l'un au moins des anneaux métalliques extérieur (4) ou intérieur (5) en enroulant une portion de bande métallique profilée sur un cylindre selon une spire avec recouvrement ou selon plusieurs spires enroulées en spirale serrée, et en soudant par points chaque extrémité de la bande profilée sur la spire qu'elle recouvre.

7. Procédé selon la revendication 6, caractérisé en ce que l'on réalise chacun des anneaux métalliques extérieur (4) et intérieur (5) en enroulant une portion de bande métallique ayant un profil en W, c'est-à-dire à 3 ondulations, d'épaisseur 0,15 à 0,25 mm, sur elle-même selon 2 à 4 spires avec recouvrement.

8. Procédé selon la revendication 5, caractérisé en ce que, dans le cas où l'âme en graphite du joint doit avoir une masse spécifique de 1,3 à 1,5 g/cm$^3$, on utilise des bandes de graphite expansé de masse spécifique «0,7 g/cm$^3$».

9. Procédé selon la revendication 5, caractérisé en ce que, dans le cas où l'âme en graphite du joint doit avoir une masse spécifique de 1,6 à 1,8 g/cm$^3$,

on utilise des bandes de graphite expansé de masse spécifique «1,1 g/cm³».

10. Utilisation du joint (100) selon l'une quelconque des revendications 1 à 4 avec un anneau de renfort intérieur (115) encliqueté dans l'anneau métallique intérieur (105) du joint (100) et avec un anneau de centrage extérieur (112) encliqueté autour de l'anneau métallique extérieur (104).

## Patentansprüche

1. Dichtung (1) zur Montage auf ebenen Oberflächen, insbesondere für Flanschverbindungen, wobei die Dichtung ringförmig ist und eine ringförmige Seele (7) aus expandiertem, geformtem Graphit aufweist, die zwischen zwei Metallringen, einem inneren (5) und einem äusseren (4), angeordnet ist, dadurch gekennzeichnet, dass

— der durch die Dichtung (1) gebildete Ring zwei plane, zueinander parallele Flächen aufweist, die im wesentlichen denen der gegossenen Graphitseele (7) zwischen dem inneren Metallring (5) und dem äusseren Metallring (4) entsprechen, wobei die Ränder dieser beiden Ringe mit den beiden ebenen Flächen glatt abschliessen,

— die beiden inneren (5) bzw. äusseren (4) Metallringe jeweils eine Federwirkung entlang der Richtung (X), senkrecht zu den planen parallelen Flächen (2) aufweisen und im Querschnitt senkrecht zu den ebenen Flächen der Dichtung (1) eine gekrümmte Oberflächen aufweisen, deren Hauptrichtung die besagte Richtung (X) ist und dass

— die ringförmige Seele (7) aus expandiertem geformtem Graphit vor dem Einsatz der Dichtung (1) eine Dichte aufweist, die zwischen 1,4 und 1,9 g/cm³ liegt.

2. Dichtung nach Anspruch 1, dadurch gekennzeichnet, dass mindestens einer der beiden Metallringe (4, 5) spiralförmig gewickelt und verschweisst ist.

3. Dichtung nach Anspruch 2, dadurch gekennzeichnet, dass die beiden Metallringe (4 und 5) aufgewickelt und verschweisst sind und eine Anzahl von Windungen aufweisen, die so gewählt ist, dass während des Pressens der Dichtung (1) in seinen Verwendungsbedingungen, die Dichtung (1) 10 bis 35% gestaucht wird.

4. Dichtung nach Anspruch 3, dadurch gekennzeichnet, dass jeder der beiden inneren (5) bzw. äusseren (4) Metallringe 2 bis 4 Windungen aus einem profilierten Band mit drei Wölbungen und einer Dicke zwischen 0,15 und 0,25 mm aufweist.

5. Verfahren zur Herstellung einer Dichtung (1) zur Montage auf ebenen Oberflächen, insbesondere für Flanschverbindungen, wobei die Dichtung (1) die Form eines flachen Ringes hat, der durch zwei parallele plane Flächen (2) begrenzt ist und aus Graphit und Metall besteht, gekennzeichnet durch folgende Verfahrensschritte:

a) Erstellung eines inneren Metallringes (5) durch Bildung einer Spirale aus einem profilierten Band oder mehrerer konzentrisch gegeneinnder angezogenen Spiralen aus demselben Profilband, wobei die Wandung des Profilbandes im Ring (5) eine im wesentlichen axiale Hauptrichtung (X) aufweist und der Ring (5) durch Verschweissung geschlossen wird,

b) Erstellung eines äusseren Metallringes (4) auf analoge Art, entweder ausgehend von demselben Profilband oder von einem Band mit einem anderen Profil;

c) Einfüllen des Bandes aus expandiertem Graphit in einer Menge, so dass nach Kompression in der Form der zu erstellenden Dichtung der Graphit eine Dichte aufweist, die zwischen 1,3 und 1,9 g/cm³· liegt;

d) Durchführung einer oder mehrerer Vorkompressionen des expandierten Graphits mit einer intermediären Dichte;

e) Anordnung des äusseren (4) und inneren (5) Ringes nach ihrer Endlage in der zu erstellenden Dichtung (1) in einem Werkzeug, wobei die äusseren (4) und inneren (5) Ringe mit ihren Kanten auf derselben ebenen Oberfläche des Werkzeuges liegen und jeweils nach innen wir nach aussen gegen Anschläge anliegen;

f) Anordnung des expandierten vorkomprimierten Graphits in dem Raum zwischen dem äusseren (4) und dem inneren (5) Ring und unmittelbar darüber und Komprimierung dieses Graphits in der ringförmigen Form, die durch die beiden Ringe (4, 5) und durch die ebene Oberfläche des Werkzeuges gebildet wird, die die beiden Ringe trägt sowie durch die parallele Fläche, die die aktive Fläche des Druckstempels bildet; und

g) Herausnehmen der so erhaltenen Dichtung.

6. Verfahren nach Anspruch 5, dadurch gekennzeichnet, dass mindestens einer der äusseren (4) bzw. inneren (5) Metallringe durch Aufrollen eines Stücks profilierten Metallbandes auf einem Zylinder in Form einer Spirale mit Überdeckung oder durch Aufrollen mehrerer Spiralen in Form einer festgezogenen Spirale gebildet wird und wobei jedes Ende des Profilbandes auf der Windung, die es überdeckt, durch Punkte angeschweisst wird.

7. Verfahren nach Anspruch 6, dadurch gekennzeichnet, dass jeder der äusseren (4) und inneren (5) Ringe erstellt werden, indem ein Stück Metallband, das ein W-förmiges Profil, d.h. ein Profil mit drei Wellen und einer Dicke zwischen 0,15 und 0,25 mm hat, zu einer Spirale mit 2 bis 4 sich überdeckenden Windungen aufgerollt wird.

8. Verfahren nach Anspruch 5, dadurch gekennzeichnet, dass in dem Fall, in dem die Graphitseele der Dichtung ein spezifisches Gewicht zwischen 1,3, und 1,5 g/cm³ haben muss, ein Band aus expandiertem Graphit mit einem spezifischen Gewicht von 0,7 g/cm³ verwendet wird.

9. Verfahren nach Anspruch 5, dadurch gekennzeichnet, dass für den Fall, dass die Graphitseele der Dichtung eine spezifische Dichte von 1,6 bis 1,8 g/cm³ haben muss, expandierte Graphitbänder mit einer spezifischen Dichte von 1,1 g/cm³ verwendet werden.

10. Verwendung der Dichtung (100) nach einem der Ansprüche 1-4 mit einem Verstärkungsring (115), der in den inneren Metallring (105) der Dichtung (100) eingerastet ist und mit einem äusseren Zentrierring (112), der um den äusseren Metallring (104) eingerastet ist.

## Claims

1. A sealing gasket (1) for an assembly having flat faces and in particular for a flange connection, said gasket being in the form of a ring and comprising an annular core (7) of moulded expanded graphite contained between two inner and outer metal rings (5 and 4 respectively) characterised in that:

— the ring formed by the gasket (1) comprises two parallel flat faces (2) which are essentially those of the moulded graphite core (7) between the inner and outer metal rings (5 and 4 respectively), the edges of said two rings being flush with said flat faces;

— the two inner and outer metal rings (5, 4) both have a spring effect in the direction (X) perpendicular to the parallel flat faces (2) and, in cross-section perpendicular to the flat faces of the gasket (1), have a corrugated wall whose main direction is said direction (X); and

— the annular core (7) of moulded expanded graphite, prior to use of the gasket (1), is of a density of between 1.4 and 1.9 g/cm$^3$.

2. A gasket according to claim 1 characterised in that at least one of its two metal rings (4, 5) is spiral-wound on to itself and welded.

3. A gasket according to claim 2 characterised in that its two metal rings (4 and 5) are spiral-wound on to themselves and welded and comprise a number of turns so selected that, when said gasket (1) is clamped under the conditions of use thereof, it is crushed by from 10 to 35%.

4. A gasket according to claim 3 characterised in that each of the two metal inner and outer rings (5, 4) comprise two to four turns of profiled strip having three corrugations and of a thickness of between 0.15 and 0.25 mm.

5. A process for the production of a sealing gasket (1) for an assembly having flat faces and in particular for a flange connection, said gasket (1) being in the form of a flat ring defined by two parallel flat faces (2) and being composed of graphite and metal, characterised in that it comprises the following steps:

a) an inner metal ring (5) is prepared by shaping a turn of profiled strip or a plurality of concentric turns which are clamped against each other from the same profiled strip, and the wall of said profiled strip having a substantially axial main direction (X) in the ring (5) and the ring (5) being closed by welding;

b) an outer metal ring (4) is produced in a similar fashion either from the same profiled strip or from a different profiled strip;

c) strips of expanded graphite are provided and a quantity thereof is prepared giving, after compression in the form of the gasket to be produced, a density of between 1.3 and 1.9 g/cm$^3$;

d) one or more steps of pre-compression of the expanded graphite to an intermediate density are effected;

e) the outer and inner rings (4 and 5 respectively) are disposed in the tool in accordance with their final arrangement in the gasket (1) to be produced, the outer and inner rings (4, 5) resting on edge on the same flat face of the tool and being in a condition of abutment towards the outside and towards the inside respectively;

f) the pre-compressed expanded graphite is disposed in the space between the outer and inner rings (4, 5) and immediately above same, and compression of said graphite is effected in the annular mould formed by said two rings (4, 5) and the flat face of the tool supporting said rings and by the parallel face forming the active face of the compression mandrel; and

g) the sealing gasket produced in that way is removed from the mould.

6. A process according to claim 5 characterised by producing one at least of the outer or inner metal rings (4, 5) by winding a portion of profiled metal strip around a cylinder to give one turn with overlap or to give a plurality of turns which are wound in a tight spiral, and spot welding each end of the profiled strip to the turn that it overlaps.

7. A process according to claim 6 characterised by producing each of the outer and inner metal rings (5) by winding a portion of metal strip of W-shaped configuration, that is to say, having three corrugations of a thickness of from 0.15 to 0.25 mm, on to itself to provide two to four turns with overlap.

8. A process according to claim 5 characterised in that, in the case in which the graphite core of the gasket is to have a density of from 1.3 to 1.5 g/cm$^3$, strips of expanded graphite of a density of «0.7 g/cm$^3$», are used.

9. A process according to claim 5 characterised in that, in the case in which the graphite core of the gasket is to have a density of from 1.6 to 1.8 g/cm$^3$, strips of expanded graphite of a density of «1.1 g/cm$^3$» are used.

10. Use of the gasket (100) according to any one of claims 1 to 4 with an inner reinforcing ring (115) which is latched into position in the inner metal ring (105) of the gasket (100) and with an outer centering ring (112) which is latched in position around the outer metal ring (104).

**FIG.1**

**FIG.2a**

**FIG.2b**

**FIG.3**

**FIG.4a**

**FIG.4b**